# EUROPÄISCHE PATENTSCHRIFT

(11) **EP 1 886 848 B1**
(45) Veröffentlichungstag und Bekanntmachung des Hinweises auf die Patenterteilung: **08.09.2010**
(21) Anmeldenummer: 07014755.8
(22) Anmeldetag: 27.07.2007
(51) Int. Cl.: B60D 1/62, B60Q 1/30, B60Q 11/00

(54) **Elektrisches Anhängeranschlussgerät**
Electric trailer connection device
Appareil de raccordement de remorque électrique

(30) Priorität: 12.08.2006 DE 102006037826
(43) Veröffentlichungstag der Anmeldung: 13.02.2008
(73) Patentinhaber: ConWys AG, 6023 Rothenburg (CH)
(72) Erfinder: Wystron, Alexander, 6005 Luzern (CH)
(74) Vertreter: Stenger, Watzke & Ring

(56) Entgegenhaltungen:
- EP-A- 0 483 650
- EP-A- 0 501 014
- EP-A- 0 546 370
- EP-A- 1 702 802
- DE-A1- 4 424 471
- DE-A1- 10 236 301
- DE-A1- 10 236 302
- DE-A1- 10 236 304

## Beschreibung

Die Erfindung betrifft ein elektrisches Anhängeranschlußgerät, das als eigenständige Baueinheit an einem Zugfahrzeug mit steuergeräteverbindendem Datennetz anzubringen ist, mit
- einer Anschlußkontakteinheit zum Anschließen elektrischer Komponenten eines Anhängerfahrzeuges,
- einer der Anschlußkontakteinheit vorgeschalteten Leistungshalbleiterschaltergruppe, wobei jeweils ein Halbleiterschalter der Leistungshalbleiterschaltergruppe mit seiner Schaltstrecke zwischen einen Stromversorgungsanschluß und einen zugeordneten Anschlußkontakt der Anschlußkontakteinheit eingeschaltet ist,
- einem oder zwei Datennetzanschlüssen zum Anschließen an das Datennetz des Zugfahrzeuges, über welche die Steuerungsinformationen für wenigstens einen Halbleiterschalter der Leistungshalbleiterschaltergruppe empfangen werden, und
- einem zusätzlich zu einer Zugfahrzeugbeleuchtungssteuerung vorgesehenen Steuergerät für wenigstens einen Halbleiterschalter der Leistungshalbleiterschaltergruppe, das den wenigstens einen Halbleiterschalter der Leistungshalbleiterschaltergruppe in Abhängigkeit von über den oder die Datennetzanschlüsse eingehenden Steuerungsinformationen ansteuert.

Ein elektrisches Anhängeranschlußgerät der vorbeschriebenen Art, das heißt ein gattungsgemäßes elektrisches Anhängeranschlußgerät ist aus der DE 44 24 471 C2 bekannt.

Bei dem aus der DE 44 24 471 C2 bekannten elektrischen Anhängeranschlußgerät sind sämtliche Halbleiterschalter der Leistungshalbleiterschaltergruppe an das Steuergerät des Anhängeranschlußgerätes angeschlossen, so daß mittels des Steuergerätes sämtliche Halbleiterschalter der Leistungshalbleiterschaltergruppe in Abhängigkeit von über den oder die Datennetzanschlüsse eingehenden Steuerinformationen angesteuert werden.

Obgleich sich das aus der DE 44 24 471 C2 vorbekannte elektrische Anhängeranschlußgerät im alltäglichen Praxiseinsatz bewährt hat, ist es nicht frei von Nachteilen.

Elektrische Anhängeranschlußgeräte der aus der DE 44 24 471 C2 bekannten Art werden typischerweise zum Zwecke der Nachrüstung eingesetzt, weil der Verkabelungs- und Montageaufwand in vorteilhafter Weise gering ist. Als Installationsort wird in aller Regel der Kofferraum eines Zugfahrzeuges gewählt.

Eine nicht ordnungsgemäße Installation des Anhängeranschlußgerätes hat zur Folge, daß die elektrischen Komponenten des Anhängerfahrzeuges nicht angesteuert werden können, wobei dies in nachteiliger Weise für den Verwender des Zugfahrzeuges unbemerkt bleibt. Ein entsprechendes Problem tritt auf, wenn das im Kofferraum eines Zugfahrzeuges angeordnete Anhängeranschlußgerät durch eine unsachgemäße Befüllung des Kofferraums beschädigt wird und es daraufhin beispielsweise zu Kurzschlüssen innerhalb des Anhängeranschlußgerätes kommt. Auch in diesem Fall fällt die Beleuchtungs- und Signalisierungselektrik des Anhängerfahrzeuges für den Verwender des Zugfahrzeuges unbemerkbar komplett aus. Dabei ist der Komplettausfall dadurch bedingt, daß sämtliche Halbleiterschalter der Leistungshalbleiterschaltergruppe an ein gemeinsames, das heißt an ein und dasselbe Steuergerät angeschlossen sind.

Ein Komplettausfall der Beleuchtungs- und Signalisierungselektrik des Anhängerfahrzeuges wird insbesondere aus sicherheitsrelevanten Gründen als nachteilig empfunden.

Es ist deshalb die **Aufgabe** der Erfindung, ein Anhängeranschlußgerät der vorgenannten Art zu schaffen, das unter Vermeidung des vorgenannten Nachteils die Möglichkeit einer Notbeleuchtung des Anhängerfahrzeuges bietet.

Zur **Lösung** dieser Aufgabe wird mit der Erfindung vorgeschlagen, daß die Leistungshalbleiterschaltergruppe wenigstens einen Halbleiterschalter aufweist, der direkt an eine elektrische Komponente des Zugfahrzeuges angeschlossen ist.

Im Unterschied zu dem aus der DE 44 24 471 C2 bekannten elektrischen Anhängeranschlußgerät sind beim erfindungsgemäßen Anhängeranschlußgerät nicht sämtliche Halbleiterschalter der Leistungshalbleiterschaltergruppe an ein gemeinsames Steuergerät angeschlossen. Es ist erfindungsgemäß vielmehr wenigstens ein Halbleiterschalter vorgesehen, der nicht an das Steuergerät des Anhängeranschlußgerätes sondern direkt an eine elektrische Komponente des Zugfahrzeuges angeschlossen ist.

Der Vorteil des erfindungsgemäßen Anhängeranschlußgerätes ist darin zu sehen, daß selbst bei einem Ausfall des Anhängeranschlußgerätes die Beleuchtungs- und Signalisierungselektrik des Anhängerfahrzeuges nicht komplett ausfällt, weil wenigstens ein Halbleiterschalter der Leistungshalbleiterschaltergruppe des Anhängeranschlußgerätes direkt, das heißt ohne Zwischenschaltung des Steuergerätes des Anhängeranschlußgerätes an eine elektrische Komponente des Zugfahrzeuges angeschlossen ist. In der Konsequenz wird im Unterschied zur Ausgestaltungsform nach der DE 44 24 471 C2 der wenigstens eine Halbleiterschalter der Leistungshalbleiterschaltergruppe direkt über das zugfahrzeugseitige Datennetz, das heißt über ein an das zugfahrzeugseitige Datennetz angeschlossenes, zugfahrzeugseitige Steuergerät angesteuert. Die anhängerfahrzeugseitig an den wenigstens einen Halbleiterschalter der Leistungshalbleiterschaltergruppe angeschlossene elektrische Komponente ist somit in vorteilhafter Weise auch dann funktionsfähig, das heißt ansteuerbar, wenn das Anhängeranschlußgerät infolge einer Beschädigung und/oder einer Fehlinstallation ausfällt, womit eine Notbeleuchtung des Anhängerfahrzeuges realisiert ist.

Kommt es zu einer Beschädigung oder zu einem Defekt innerhalb des Anhängeranschlußgerätes, so können all diejenigen elektrischen Komponenten des Anhängeranschlußgerätes nicht mehr ordnungsgemäß angesteuert werden, die an diejenigen Halbleiterschalter der Leistungshalbleiterschaltergruppe angeschlossen sind, die ihre Steuerungsinformation über das Steuergerät des Anhängeranschlußgerätes empfangen. Aus diesem Grunde ist erfindungsgemäß wenigstens ein Halbleiterschalter der Leistungshalbleiterschaltergruppe vorgesehen, der nicht an das Steuergerät des Anhängeranschlußgerätes sondern direkt an eine elektrische Komponente des Zugfahrzeuges angeschlossen ist. Selbst bei einem Komplettausfall des Anhängeranschlußgerätes bleibt so zumindest eine elektrische Komponente des Anhängerfahrzeuges ansteuerbar.

Die erfindungsgemäße Ausgestaltung bringt zwar im Vergleich zu dem aus der DE 44 24 471 C2 bekannten Anhängeranschlußgerät den Nachteil eines erhöhten Verkabelungs- und Montageaufwandes mit sich, doch dieser Nachteil wird dadurch aufgehoben, daß das erfindungsgemäße Anhängeranschlußgerät eine Notbeleuchtung des Anhängerfahrzeuges gestattet, was bei dem aus der DE 44 24 471 C2 bekannten Anhängeranschlußgerät nicht möglich ist.

Gemäß einem weiteren Merkmal der Erfindung ist vorgesehen, daß der wenigstens eine Halbleiterschalter mittels einer Anschlußleitung an die elektrische Komponente des Zugfahrzeuges angeschlossen ist, wobei die Anschlußleitung in eine Verbindungsleitung zwischen der elektrischen Komponente des Zugfahrzeuges und dem steuergeräteverbindenden Datennetz des Zugfahrzeuges eingeschaltet ist. Bevorzugterweise ist die Anschlußleitung in eine Verbindungsleitung zwischen der elektrischen Komponente des Zugfahrzeuges und einem an das steuergeräteverbindende Datennetz des Zugfahrzeuges angeschlossenen zugfahrzeugseitigen Steuergerät eingeschleift. Das aus dem Datennetz des Zugfahrzeuges stammende Signal für die elektrische Komponente des Zugfahrzeuges wird quasi mittels der Anschlußleitung abgegriffen und zur Ansteuerung des wenigstens einen Halbleiterschalters der Leistungshalbleiterschaltergruppe genutzt, womit das Signal zur Ansteuerung der elektrischen Komponente des Zugfahrzeuges, das heißt der zugfahrzeuginternen elektrischen Komponente für die elektrische Komponente des Anhängerfahrzeuges abgezweigt wird.

Gemäß einem weiteren Merkmal der Erfindung ist vorgesehen, daß es sich bei der elektrischen Komponente des Zugfahrzeuges um die dritte Bremsleuchte des Zugfahrzeuges handelt. Bevorzugterweise ist deshalb auch vorgesehen, daß es sich bei der an den wenigstens einen Halbleiterschalter anhängerfahrzeugseitig angeschlossenen elektrischen Komponente um eine Bremsleuchte handelt. Gemäß dieser Ausführungsform ist die erfindungsgemäß realisierte Notbeleuchtung des Anhängerfahrzeuges dadurch sichergestellt, daß zumindest die Bremsleuchte bzw. die Bremsleuchten des Anhängerfahrzeuges funktionstüchtig ist, und zwar auch dann, wenn das Anhängeranschlußgerät mit der Konsequenz ausfällt, daß die übrige Beleuchtungs- und Signalisierungstechnik des Anhängerfahrzeuges nicht mehr ordnungsgemäß betrieben werden kann.

Allgemein läßt sich sagen, daß es sich bei der an den wenigstens einen Halbleiterschalter der Leistungshalbleiterschaltergruppe anhängerfahrzeugseitig angeschlossenen elektrischen Komponente um eine Beleuchtungseinheit des Anhängerfahrzeuges handelt. Dabei kommen als anhängerfahrzeugseitige Beleuchtungseinheit insbesondere eine Bremsleuchte des Anhängerfahrzeuges oder die Warnblinkanlage des Anhängerfahrzeuges in Frage. Dementsprechend ist die zugfahrzeugseitige elektrische Komponente auszuwählen, an die der wenigstens eine Halbleiterschalter der Leistungshalbleiterschaltergruppe zugfahrzeugseitig anzuschließen ist. Wenn es sich bei der anhängerfahrzeugseitigen Beleuchtungseinheit um eine Bremsleuchte des Anhängerfahrzeuges handelt, so ist der wenigstens eine Halbleiterschalter der Leistungshalbleiterschaltergruppe an eine als Bremsleuchte ausgebildete elektrische Komponente des Zugfahrzeuges anzuschließen. Wenn als anhängerfahrzeugseitige Beleuchtungseinheit die Warnblinkanlage des Anhängerfahrzeuges gewählt wird, so ist der wenigstens eine Halbleiterschalter der Leistungshalbleiterschaltergruppe demgemäß an die als Warnblinkanlage ausgebildete elektrische Komponente des Zugfahrzeuges anzuschließen. Welche elektrischen Komponenten zugfahrzeugseitig und anhängerfahrzeugseitig auch immer ausgewählt werden, von entscheidender Bedeutung ist, daß zumindest die als Beleuchtungseinheit ausgebildete elektrische Komponente des Anhängerfahrzeuges funktionstüchtig ist, die an eine elektrische Komponente des Zugfahrzeuges direkt angeschlossen ist.

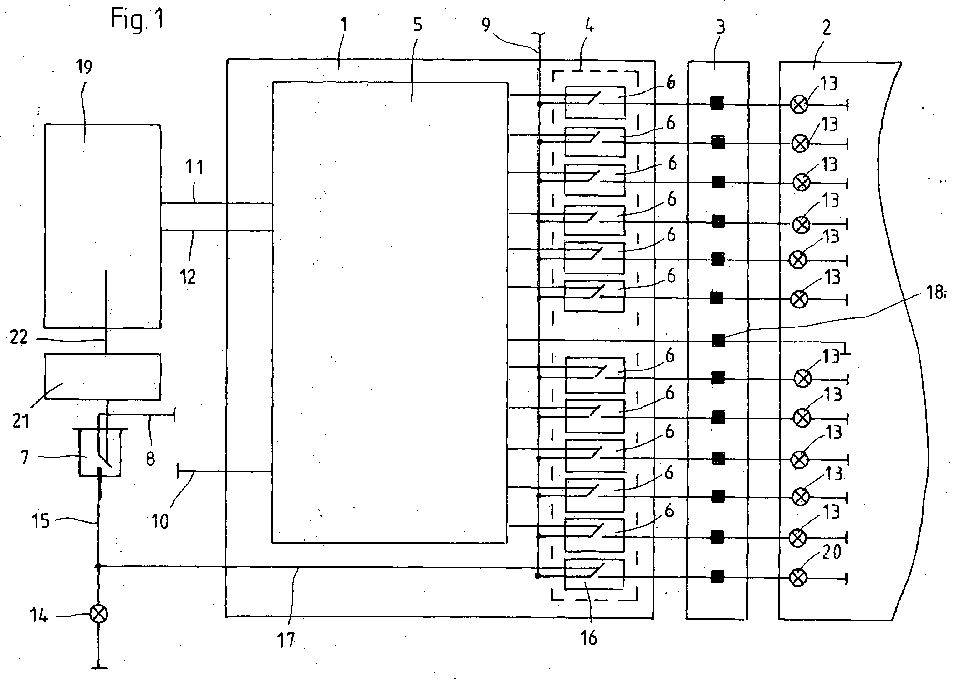

Weitere Merkmale und Vorteile der Erfindung ergeben sich aus der nachfolgenden Beschreibung anhand der einzigen Fig. 1, die schematisch ein Blockschaltbild des erfindungsgemäßen Anhängeranschlußgerätes zeigt.

Das elektrische Anhängeranschlußgerät 1 dient dazu, die Beleuchtungs- und Signalisierungselektrik 2 eines Anhängerfahrzeuges an die im jeweiligen Zugfahrzeug vorgesehenen Bedienelemente anzukoppeln. Zum Anschluß der Beleuchtungs- und Signalisierungselektrik 2 des Anhängerfahrzeuges an das im Zugfahrzeug zu montierende Anhängeranschlußgerät 1 besitzt letzteres ausgangsseitig eine Anschlußkontakteinheit 3 mit einer der Anzahl der einzelnen anzusteuernden elektrischen Komponenten 13 und 20 der Beleuchtungs- und Signalisierungselektrik 2 des Anhängerfahrzeuges entsprechenden Anzahl von Anschlußkontakten. Im gezeigten Beispiel umfassen die elektrischen Komponenten des Anhängerfahrzeuges ein Nebelschlußlicht, einen Rückfahrscheinwerfer sowie jeweils ein Schlußlicht und ein Blinklicht links und rechts, welche elektrischen Komponenten in der Darstellung nach Fig. 1 jeweils mit dem Bezugszeichen 13 gekennzeichnet sind. Als weitere elektrische Komponente des Anhängerfahrzeuges ist ein Bremslicht vorgesehen, welches das Bezugszeichen 20 trägt. Eine Anschlußklemme 18 der Anschlußkontakteinheit 3 dient der Erkennung, ob ein Anhängerfahrzeug angeschlossen ist.

Das Anhängeranschlußgerät 1 beinhaltet des weiteren eine der Anschlußkontakteinheit 3 vorgeschaltete Leistungshalbleiterschaltergruppe 4 sowie ein dieser Leistungshalbleiterschaltergruppe 4 vorgeschaltetes Steuergerät 5.

Die Leistungshalbleiterschaltergruppe 4 beinhaltet je nach Ausführungsform, das heißt je nach Anzahl der anzuschließenden elektrischen Komponenten 13, 20 des Anhängerfahrzeuges entsprechend viele Halbleiterschalter 6 und 16, wobei ein jeder Halbleiterschalter mit seiner Schaltstrecke zwischen einen Stromversorgungsanschluß 9 und einem zugeordneten Anschlußkontakt der Anschlußkontakteinheit 3 eingeschaltet ist. Im gezeigten Ausführungsbeispiel sind insgesamt elf Halbleiterschalter 6 und ein Halbleiterschalter 16 vorgesehen.

Wie sich aus der Darstellung nach Fig. 1 erkennen läßt, sind die Halbleiterschalter 6 der Leistungshalbleiterschaltergruppe 4 jeweils den elektrischen Komponenten 13 des Anhängerfahrzeuges zugeordnet. Die Leistungshalbleiterschaltergruppe 4 umfaßt wenigstens einen Halbleiterschalter 16, der der beispielsweise als Bremsleuchte ausgebildeten elektrischen Komponente 20 des Anhängerfahrzeuges zugeordnet ist.

Die Halbleiterschalter 6 der Leistungshalbleiterschaltergruppe 4 sind an das Steuergerät 5 des Anhängeranschlußgerätes 1 angeschlossen. Das Steuergerät 5 des Anhängeranschlußgerätes 1 steht seinerseits über Datenanschlüsse 11 und 12 mit dem Datennetz 19 des Zugfahrzeuges in Verbindung, welches Datennetz 19 ein digitales Kommunikationsnetz, beispielsweise ein CAN-Bus gestütztes Netz ist. Das Steuergerät 5 ist zudem an einen Massenanschluß 10 angeschlossen.

Das Zugfahrzeug verfügt neben anderen elektrischen Komponenten über eine beispielsweise' als dritte Bremsleuchte ausgebildete elektrische Komponente 14. Diese elektrische Komponente 14 ist über eine Verbindungsleitung 15 an ein zugfahrzeuginternes Steuergerät 21 angeschlossen, welches seinerseits über eine Verbindungsleitung 22 an das steuergeräteverbindende Datennetz 19 des Zugfahrzeuges angeschlossen ist. In die Verbindung zwischen Steuergerät 21 und der elektrischen Komponente 14 ist ein Halbleiterschalter 7 eingeschaltet, der zudem an einen Stromversorgungsanschluß 8 angeschlossen ist.

Der wenigstens eine Halbleiterschalter 16 der Leistungshalbleiterschaltergruppe 4 ist, wie Fig. 1 deutlich erkennen läßt, nicht an das Steuergerät 5 des Anhängeranschlußgerätes 1 angeschlossen. Es ist vielmehr vorgesehen, daß der wenigstens eine Halbleiterschalter 16 direkt an die elektrische Komponente 14 des Zugfahrzeuges angeschlossen ist, zu welchem Zweck eine Anschlußleitung 17 vorgesehen ist, mittels welcher der wenigstens eine Halbleiterschalter 16 in die Verbindungsleitung 15 zwischen der elektrischen Komponente 14 des Zugfahrzeuges und dem zugfahrzeuginternen Steuergerät 21 eingeschaltet ist.

Wie das Blockschaltbild nach Fig. 1 erkennen läßt, ist die beispielsweise als Bremsleuchte ausgebildete elektrische Komponente 20 des Anhängerfahrzeuges bzw. der dieser elektrischen Komponente 20 vorgeschaltete Halbleiterschalter 16 in die Verbindungsleitung 15 für die beispielsweise als dritte Bremsleuchte ausgestaltete elektrische Komponente 14 des Zugfahrzeuges eingeschaltet. Im Falle der Ansteuerung der als dritte Bremsleuchte ausgebildeten elektrischen Komponente 14 durch das Steuergerät 21 gelangt ein entsprechendes Signal über die Anschlußleitung 17 auch an den Halbleiterschalter 16 der Leistungshalbleiterschaltergruppe 4 des Anhängeranschlußgerätes 1, und zwar mit der Folge, daß die beispielsweise als Bremsleuchte ausgebildete elektrische Komponente 20 des Anhängerfahrzeuges aufleuchtet. Alle übrigen elektrischen Komponenten 13 des Anhängerfahrzeuges sind über die jeweils vorgeschalteten Halbleiterschalter 6 der Leistungshalbleiterschaltergruppe 4 an das Steuergerät 5 des Anhängeranschlußgerätes 1 angeschlossen, so daß eine Signalübertragung an diese elektrischen Komponenten 13 durch das Steuergerät 5 des Anhängeranschlußgerätes 1 erfolgt.

Aus dem Blockschaltbild nach Fig. 1 ist ersichtlich, daß im Falle eines Defektes des Anhängeranschlußgerätes 1, welcher beispielsweise dadurch auftreten kann, daß das Steuergerät 5 des Anhängeranschlußgerätes 1 ausfällt, nach wie vor eine ordnungsgemäße Betätigung der beispielsweise als Bremsleuchte ausgestalteten elektrischen Komponente 20 des Anhängerfahrzeuges möglich ist, weil die Signalübertragung an die elektrische Komponente 20 nicht über das Steuergerät 5 sondern über die Anschlußleitung 17 und damit über das zugfahrzeuginterne Steuergerät 21 direkt erfolgt. In vorteilhafter Weise ist so eine Notbeleuchtung des Anhängerfahrzeuges realisiert.

Bevorzugterweise findet eine in Fig. 1 grafisch nicht näher dargestellte Überwachung der wenigstens einen elektrischen Komponente 20 des Anhängerfahrzeuges statt. Dabei kann eine solche Überwachungsfunktion entweder integriert oder analog durchgeführt werden. Eine integrierte Überwachung ließe sich beispielsweise dadurch realisieren, daß der zur wenigstens einen elektrischen Komponente 20 des Anhängerfahrzeuges gehörende wenigstens eine Halbleiterschalter 16 über eine Diagnoseleitung an das zugfahrzeuginterne Steuergerät 21 angeschlossen ist. Alternativ hierzu wäre auch denkbar, eine Überwachung analog, das heißt niederohmig auszugestalten. In diesem Fall käme ein hierfür separat vorzusehendes Steuergerät zum Einsatz.

### Bezugszeichenliste

- 1: Anhängeranschlußgerät
- 2: Beleuchtungs- und Signalisierungselektrik
- 3: Anschlußkontakteinheit
- 4: Leistungshalbleiterschaltergruppe
- 5: Steuergerät
- 6: Halbleiterschalter
- 7: Halbleiterschalter
- 8: Stromversorgung
- 9: Stromversorgungsanschluß
- 10: Massenanschluß
- 11: Datenleitung
- 12: Datenleitung
- 13: elektrische Komponente
- 14: elektrische Komponente
- 15: Verbindungsleitung
- 16: Halbleiterschalter
- 17: Anschlußleitung
- 18: Anschlußklemme
- 19: Datennetz
- 20: elektrische Komponente
- 21: zugfahrzeugseitiges Steuergerät
- 22: Verbindungsleitung

## Patentansprüche

1. Elektrisches Anhängeranschlußgerät (1), das als eigenständige Baueinheit an einem Zugfahrzeug mit steuergeräteverbindendem Datennetz (19) anzubringen ist, wobei eine zugfahrzeugseitige elektrische Komponente (14) an einem an dem Datennetz (19) angeschlossenen Steuergerät (21) angeschlossen ist, mit
- einer Anschlußkontakteinheit (3) zum Anschließen elektrischer Komponenten (13, 20) eines Anhängerfahrzeuges,
- einer der Anschlußkontakteinheit (3) vorgeschalteten Leistungshalbleiterschaltergruppe (4), wobei jeweils ein Halbleiterschalter (6, 16) der Leistungshalbleiterschaltergruppe (4) mit seiner Schaltstrecke zwischen einen Stromversorgungsanschluß (9) und einen zugeordneten Anschlußkontakt der Anschlußkontakteinheit (3) eingeschaltet ist,
- einem oder zwei Datennetzanschlüssen (11, 12) zum Anschließen an das Datennetz (19) des Zugfahrzeuges, über welche die Steuerungsinformationen für wenigstens einen Halbleiterschalter (6) der Leistungshalbleiterschaltergruppe (4) empfangen werden, und
- einem zusätzlich zu einer Zugfahrzeugbeleuchtungssteuerung vorgesehenen Steuergerät (5) für wenigstens einen Halbleiterschalter (6) der Leistungshalbleiterschaltergruppe (4), das den wenigstens einen Halbleiterschalter (6) der Leistungshalbleiterschaltergruppe (4) in Abhängigkeit von über den oder die Datennetzanschlüsse (11, 12) eingehenden Steuerungsinformationen ansteuert,
**dadurch gekennzeichnet,**
**dass** die Leistungshalbleiterschaltergruppe (4) wenigstens einen Halbleiterschalter (16) aufweist, der direkt an die elektrische Komponente (14) des Zugfahrzeuges angeschlossen ist.

2. Elektrisches Anhängeranschlußgerät nach Anspruch 1, **dadurch gekennzeichnet, daß** der wenigstens eine Halbleiterschalter (16) mittels einer Anschlußleitung (17) an die elektrische Komponente (14) des Zugfahrzeuges angeschlossen ist, wobei die Anschlußleitung (17) in eine Verbindungsleitung (15) zwischen der elektrischen Komponente (14) des Zugfahrzeuges und dem steuergeräteverbindenden Datennetz (19) des Zugfahrzeuges eingeschaltet ist.

3. Elektrisches Anhängeranschlußgerät nach Anspruch 2, **dadurch gekennzeichnet, daß** der wenigstens eine Halbleiterschalter (16) mittels einer Anschlußleitung (17) an die elektrische Komponente (14) des Zugfahrzeuges angeschlossen ist, wobei die Anschlußleitung (17) in eine Verbindungsleitung (15) zwischen der elektrischen Komponente (14) des Zugfahrzeuges und einem zugfahrzeugseitigen Steuergerät (21) eingeschaltet ist.

4. Elektrisches Anhängeranschlußgerät nach Anspruch 1, 2 oder 3, **dadurch gekennzeichnet, daß** es sich bei der elektrischen Komponente (14) des Zugfahrzeuges um die dritte Bremsleuchte des Zugfahrzeuges handelt.

5. Elektrisches Anhängeranschlußgerät nach Anspruch 1, 2 oder 3, **dadurch gekennzeichnet, daß** es sich bei der elektrischen Komponente (14) des Zugfahrzeuges um die Warnblinkanlage des Zugfahrzeuges handelt.

6. Elektrisches Anhängeranschlußgerät nach einem der vorhergehenden Ansprüche, **dadurch gekennzeichnet, daß** es sich bei der an den wenigstens einen Halbleiterschalter (16) anhängerfahrzeugseitig anzuschließenden elektrischen Komponente (20) um eine Beleuchtungseinheit des Anhängerfahrzeuges handelt.

7. Elektrisches Anhängeranschlußgerät nach Anspruch 6, **dadurch gekennzeichnet, daß** die Beleuchtungseinheit eine Bremsleuchte des Anhängerfahrzeuges ist.

8. Elektrisches Anhängeranschlußgerät nach Anspruch 6, **dadurch gekennzeichnet, daß** die Beleuchtungseinheit die Warnblinkanlage des Anhängerfahrzeuges ist.

## Claims

1. An electrical trailer connecting device (1) to be arranged as an independent physical unit on a towing vehicle with a data network (19) for networking control devices, wherein an electrical component (14) of the towing vehicle is connected to a control device (21) that, in turn, is connected to the data network (19), with
- a contact terminal unit (3) for connecting the electrical components (13, 20) of a towed vehicle,
- a power semiconductor switch assembly (4) that is connected in series to the contact terminal unit (3), wherein the contact gap of one respective semiconductor switch (6, 16) of the power semiconductor switch assembly (4) is inserted between a power supply terminal (9) and an assigned contact terminal of the contact terminal unit (3),
- one or two data network connections (11, 12) for connecting to the data network (19) of the towing vehicle, wherein the control information for at least one semiconductor switch (6) of the power semiconductor switch assembly (4) can be received via said data network connection or data network connections , and
- a control device (5) for at least one semiconductor switch (6) of the power semiconductor switch assembly (4), wherein said control device is provided in addition to a lighting system control of the towing vehicle and controls the at least one semiconductor switch (6) of the power semiconductor switch assembly (4) in dependence on control information received via the data network connection or data network connections (11, 12),
**characterized in**
**that** the power semiconductor switch assembly (4) features at least one semiconductor switch (16) that is directly connected to the electrical component (14) of the towing vehicle.

2. The electrical trailer connecting device according to Claim 1, **characterized in that** the at least one semiconductor switch (16) is connected to the electrical component (14) of the towing vehicle by means of a connecting line (17), wherein the connecting line (17) is inserted into a connecting line (15) between the electrical component (14) of the towing vehicle and the data network (19) of the towing vehicle for networking control devices.

3. The electrical trailer connecting device according to Claim 2, **characterized in that** the at least one semiconductor switch (16) is connected to the electrical component (14) of the towing vehicle by means of a connecting line (17), wherein the connecting line (17) is inserted into a connecting line (15) between the electrical component (14) of the towing vehicle and a control device (21) of the towing vehicle.

4. The electrical trailer connecting device according to Claim 1, 2 or 3, **characterized in that** the electrical component (14) of the towing vehicle consists of the third brake light of the towing vehicle.

5. The electrical trailer connecting device according to Claim 1, 2 or 3, **characterized in that** the electrical component (14) of the towing vehicle consists of the hazard warning light system of the towing vehicle.

6. The electrical trailer connecting device according to one of the preceding claims, **characterized in that** the electrical component (20) of the towed vehicle to be connected to the at least one semiconductor switch (16) consists of a lighting system of the towed vehicle.

7. The electrical trailer connecting device according to Claim 6, **characterized in that** the lighting system consists of a brake light of the towed vehicle.

8. The electrical trailer connecting device according to Claim 6, **characterized in that** the lighting system consists of the hazard warning light system of the towed vehicle.

## Revendications

1. Appareil électrique de raccordement de remorque (1) qui s'installe sous forme d'unité de construction autonome sur un véhicule tracteur avec un réseau de données (19) reliant les appareils de commande, un composant électrique (14) situé au niveau du véhicule tracteur étant raccordé à un appareil de commande (21) raccordé au réseau de données (19), comportant :
- une unité de contact de raccordement (3) pour le raccordement de composants électriques (13, 20) d'un véhicule remorque,
- un groupe de commutateurs à semi-conducteurs de puissance (4) installé en amont de l'unité de contact de raccordement (3), respectivement un commutateur à semi-conducteurs (6, 16) du groupe de commutateurs à semi-conducteurs de puissance (4) étant mis en circuit entre un raccordement d'alimentation électrique (9) et un contact de raccordement associé de l'unité de contact de raccordement (3)
- un ou deux raccordements de réseau de données (11, 12) pour le raccordement au réseau de données (19) du véhicule tracteur par lequel les informations de commande sont reçues pour au moins un commutateur à semi-conducteurs (6) du groupe de commutateurs à semi-conducteurs de puissance (4) et
- un appareil de commande (5) prévu en plus pour la commande de l'éclairage du véhicule tracteur pour au moins un commutateur à semi-conducteurs (6) du groupe de commutateurs à semi-conducteurs de puissance (4) et qui commande l'au moins un commutateur à semi-conducteurs (6) du groupe de commutateurs à semi-conducteurs de puissance (4) en fonction d'informations de commande entrant par le ou les raccordements de réseau de données (11, 12),
**caractérisé en ce que**
le groupe de commutateurs à semi-conducteurs de puissance (4) présente au moins un commutateur à semi-conducteurs (16) qui est raccordé directement au composant électrique (14) du véhicule tracteur.

2. Appareil électrique de raccordement de remorque selon la revendication 1, **caractérisé en ce que** l'au moins un commutateur à semi-conducteurs (16) est raccordé au moyen d'une ligne de raccordement (17) au composant électrique (14) du véhicule tracteur, le câble de raccordement (17) étant en mis en circuit dans une ligne de liaison (15) entre les composants électriques (14) du véhicule tracteur et le réseau de données (19) reliant les appareils de commande du véhicule tracteur.

3. Appareil électrique de raccordement de remorque selon la revendication 2, **caractérisé en ce que** l'au moins un commutateur à semi-conducteurs (16) est raccordé au moyen d'une ligne de raccordement (17) au composant électrique (14) du véhicule tracteur, le câble de raccordement (17) étant en mis en circuit dans une ligne de liaison (15) entre le composant électrique (14) du véhicule tracteur et un appareil de commande (21) situé au niveau du véhicule tracteur.

4. Appareil électrique de raccordement de remorque selon la revendication 1, 2 ou 3, **caractérisé en ce que** le composant électrique (14) du véhicule tracteur est le troisième feu de frein du véhicule tracteur.

5. Appareil électrique de raccordement de remorque selon la revendication 1, 2 ou 3, **caractérisé en ce que** le composant électrique (14) du véhicule tracteur est l'installation de feux de détresse du véhicule tracteur.

6. Appareil électrique de raccordement de remorque selon une des revendications précédentes, **caractérisé en ce que** l'au moins un composant électrique (20) à raccorder au niveau du véhicule remorque à l'au moins un commutateur à semi-conducteurs (16) est une unité d'éclairage du véhicule remorque.

7. Appareil électrique de raccordement de remorque selon la revendication 6, **caractérisé en ce que** l'unité d'éclairage est un feu de frein du véhicule remorque.

8. Appareil électrique de raccordement de remorque selon la revendication 6, **caractérisé en ce que** l'unité d'éclairage est l'installation de feux de détresse du véhicule tracteur.
